# EUROPEAN PATENT SPECIFICATION

(11) **EP 3 912 875 B1**
(45) Date of publication and mention of the grant of the patent: **13.03.2024**
(21) Application number: 21174957.7
(22) Date of filing: 20.05.2021
(51) Int. Cl.: B60T 17/22, F16D 66/02, B60T 13/22, F16D 55/40

(54) **METHOD AND SYSTEM FOR WEAR MONITORING OF A HYDRAULIC PARKING BRAKE**
VERFAHREN UND SYSTEM ZUR VERSCHLEISSÜBERWACHUNG EINER HYDRAULISCHEN FESTSTELLBREMSE
PROCÉDÉ ET SYSTÈME DE SURVEILLANCE DE L'USURE D'UN FREIN DE STATIONNEMENT HYDRAULIQUE

(30) Priority: 21.05.2020 IT 202000011830
(43) Date of publication of application: 24.11.2021
(73) Proprietor: CNH Industrial Italia S.p.A., 10156 Torino (IT)
(72) Inventor: Morandi, Gabriele, 41125 Modena (IT); Trollini, Valerio, 06049 Spoleto (PG) (IT); Melegari, Mario, 41126 Modena (IT); Megna, Vincenzo, 41030 Bastiglia (MO) (IT); Zanasi, Nicholas, 41013 Modena (MO) (IT)
(74) Representative: CNH Industrial IP Department

(56) References cited:
- WO-A1-2013/029056
- FR-A1- 3 076 267
- US-A1- 2012 221 184
- US-A1- 2017 120 884

## Description

### Field of the invention

The present invention relates to a method of diagnosing the wear of a hydraulic parking brake, in particular a parking brake comprising a pack of discs and more precisely of an agricultural vehicle.

### State of the art

Generally the parking brake is also implemented as an emergency brake. Examples can be found in US2012/221184A1 and US2017/120884A1.

A method of estimating the wear of a hydraulic parking brake is known, realized on the basis of the measure of the energy spent to stop the vehicle in an emergency braking, assuming that the wheels are perfectly inflated, the vehicle is fully loaded and flat.

It is believed that this method is not reliable as there are too many approximations and it is not easy to verify the fulfillment of the optimal conditions for monitoring.

In addition, this method presupposes the use of a parking brake as an emergency brake, i.e. with the vehicle in motion.

In the field of agricultural vehicles, the parking brake is made by means of a pack of discs, in which an input of the disc pack is connected to a fixed point of the vehicle and an input opposite the first is connected to a transmission. Therefore, the packing of the disc pack determines the blocking of the vehicle transmission with respect to the aforementioned fixed point.

If not specifically excluded in the detailed description that follows, what is described in this chapter is to be considered as an integral part of the detailed description.

### Summary of the invention

Scope of the present invention is to propose a method for wear monitoring of a hydraulic parking brake, as claimed in independent claim 1.

The basic idea of the present invention is to monitor the derivative of the pressure within the actuation system of the piston which acts on the hydraulic brake, measuring the time interval elapsing between a first instant, corresponding to the engagement command of the parking brake, and a second instant in which the derivative of the pressure assumes a second diverging trend.

In fact, it has been discovered that in hydraulic braking systems, immediately after the activation of the brake engagement command, there is a rapid increase in pressure, in the control circuit of the actuating piston, then a plateau corresponding to the stroke of the piston and a further rapid increase in pressure corresponding to the compression of the pack of discs which define the parking brake or at the stroke end of the piston.

An electrical signal is associated with the pressure measurement. A processing unit calculates the derivative of the pressure measured in the piston actuation circuit and calculates a time interval that elapses between the first instant and the second instant. A gradual lengthening of the aforesaid interval indicates a gradual worsening of the wear state of the hydraulic parking brake.

Advantageously, the present method of measurement is independent of any hypothesis about the conditions of inflation of the wheels, the loading and inclination conditions of the vehicle.

The first instant is associated with the switching of a hydraulic circuit control switch or with a first divergent trend of the pressure derivative.

It has been discovered that the first divergent trend of the pressure derivative occurs after a fixed time interval from the switching of the hydraulic circuit activation command. Therefore, thanks to this discovery it has been understood that for the purpose of assessing the lengthening of the monitored time interval, it is no relevant the detection of the instant of activation of the hydraulic control activation command or the corresponding first divergence event of the pressure derivative.

According to the present invention, monitoring of the state of wear of the parking brake is performed during activation of the same regardless of the functionality of the parking brake or emergency.

The dependent claims describe preferred variants of the invention, forming an integral part of this description.

### Brief description of the figures

Further objects and advantages of the present invention will become clear from the detailed description that follows of an example of embodiment of the same (and of its variants) and from the attached drawings given purely for explanatory and non-limiting purposes, in which:
Figure 1 shows a trend of the pressures as the state of wear of a hydraulic parking brake of an agricultural vehicle changes according to the method of the present invention;
Figure 2 shows an example of a circuit for actuating a hydraulic parking brake of a modified agricultural vehicle according to the present invention;
Figure 3 shows an agricultural vehicle in which the hydraulic parking brake of Figure 2 and the monitoring method of the present invention is implemented;
Figure 4 shows an exemplary flowchart of the method of the present invention, performed at an engagement and/or disengagement of the parking brake.

The same numbers and the same reference letters in the figures identify the same elements or components.

In the context of this description, the term "second" component does not imply the presence of a "first" component. These terms are indeed used as labels to improve clarity and should not be intended as limiting.

The elements and characteristics illustrated in the various preferred embodiments, including the drawings, can be modified within the scope of the invention as defined by the appended claims.

### Detailed description of exemplary embodiments

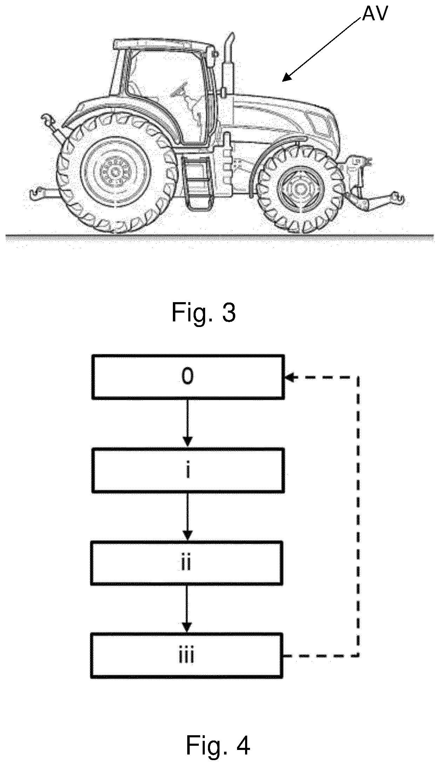

The present invention relates to an agricultural vehicle AV shown in Figure 3 equipped with a hydraulic parking brake BK equipped with a hydraulic circuit for actuating the brake. A pressure sensor PS is installed on the circuit to convert a pressure signal into an electrical signal.

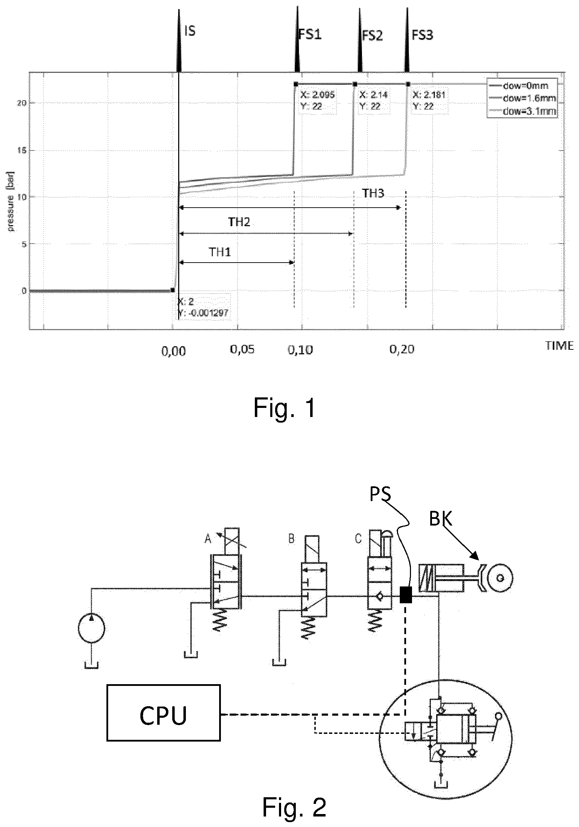

A CPU processing unit is operationally connected with the PS sensor and acquire a pressure trend within the hydraulic circuit at least during the engagement and/or disengagement of the parking brake, see figure 2.

The diagram of figure 2 represents an example of circuit to which the present invention can be applied. This scheme has been extracted from US2018304877 in which there is a detailed description of the components represented here, including a piston which acts on the friction members which block at least one wheel of the vehicle.

With reference to figure 1, it has been observed that when the parking brake is activated, there is a sharp increase in pressure. Subsequently, during the stroke of the piston, the pressure remains approximately constant, defining a so-called plateau. When the piston acting on the brake friction members, compressing them, there is a further sharp increase in pressure.

In terms of derivative, a sharp increase in pressure may correspond to a divergent trend similar to the Dirac delta. Therefore, the pulses FS1, FS2, F3 are represented in the figures. These pulses represent an event that interrupts the measurement of the amplitude TH1, TH2, TH3, etc. of a time interval that begins approximately when the command to activate the parking brake BK is activated.

According to the present invention, the event that causes the start of the measurement of the amplitude of the time interval corresponds to the activation of the hydraulic control or to the corresponding IS divergence of the derivative of the pressure signal when the hydraulic circuit is activated.

Generally the engagement command is electro-actuated by means of an electro-hydraulic valve which has its own inertia and therefore a fairly stable delay with respect to the activation of the command. Therefore, it is equivalent to start the measurement of the aforementioned amplitude of the time interval when the electrical activation signal is detected, or when, a few tenths of seconds later, the first divergent trend (spike) IS occurs.

The plateau pattern is a primary feature of the hydraulic circuit. In fact, the mobile piston designed to compress the friction elements of the parking brake BK is moved by the pumping of hydraulic fluid, generally hydraulic oil, with a limited power, proportional to the flow rate for the generated pressure.

Therefore, the monitoring method object of the present invention provides for the execution in succession (see figure 4):
- i a first step of acquiring, when the parking brake is engaged, a derivative of a signal representative of a pressure in a relative parking brake actuation circuit,
- ii a second step of measuring a time interval TH2, TH3, etc .. elapsing between the first instant IS, corresponding to the activation of the parking brake engagement command, and a second instant FS1, FS2, FS3, etc. wherein the pressure derivative assumes a second divergent trend and
- iii a third step of comparing the time interval TH2, TH3, etc .. with a predetermined TH1 threshold.

The threshold TH1 can be determined for example as the average of time interval amplitudes acquired on a sample of agricultural vehicles equipped with a new parking brake, or it can be determined as the average of time interval amplitudes acquired on the same vehicle during the first brake engagements of parking. For this reason, this threshold TH1 is indicated with a similar notation with respect to the amplitude of the monitored time interval to determine the state of wear of the parking brake.

According to a preferred variant, the agricultural vehicle is further equipped with an external push-button panel (not shown) arranged to be able to control the forward or backward movement of the agricultural vehicle from the outside, keeping the hydraulic parking brake at least partially engaged.

The transmission is activated without releasing the brake, which obviously is subject to considerable wear.

Therefore, reliable monitoring of the hydraulic brake wear status has become a priority problem.

The fact of having an external push-button panel that allows you to move the vehicle from the outside, while the parking brake is applied, can be implemented independently of this method of estimating the wear of the parking brake itself.

The present invention can be advantageously carried out by means of a computer program which comprises coding means for realization of one or more steps of the method, when this program is run on a computer. Therefore, it is understood that the scope of protection extends to said computer program and further to computer readable means which comprise a recorded message, said computer readable means comprising program coding means for carrying out one or more steps of the method, when said program is run on a computer. Implementing variations to the non-limiting example described are possible, without, however, departing from the scope of protection of the present invention, as defined by the appended claims.

From the above description, the person skilled in the art is able to realize the object of the invention without introducing further construction details.

## Claims

1. Method for wear monitoring of a hydraulic parking brake comprising in succession (i) a first step of acquisition, at an engagement of the parking brake, a derivative of signal representative of a pressure in a corresponding actuation circuit of the parking brake,
the method is **characterized in that** it further comprises (ii) a second step of measurement of a time interval (TH2, TH3, etc..) elapsing between a first instant (IS), corresponding to the activation of the engagement command of the parking brake and associated with the switching of a control switch of the hydraulic circuit or with a first divergent trend of the derivative of the signal representative of the pressure, and a second instant (FS1, FS2, FS3) wherein the derivative of said signal assumes a second divergent trend and (iii) a third step of comparing said time interval (TH2, TH3, etc..) with a predetermined threshold (TH1).

2. Method according to claim 1, comprising a preliminary step of setting as said predetermined threshold (TH1) said time interval obtained by means of a first preliminary execution of the first and second steps, namely when the brake is new.

3. Method according to claim 1 or 2, wherein said derivative is calculated by implementing a processing unit suitably configured to acquire at least said signal representative of the pressure.

4. Computer program comprising program coding means suitable for carrying out all steps (i - iii) of any one of claims 1 to 3, when said program is run on a computer.

5. Computer readable means comprising a recorded program, said computer readable means comprising program coding means suitable for carrying out all steps (i - iii) of any one of claims 1 to 3, when said program is run on a computer.

6. Wear monitoring system of a hydraulic parking brake comprising
- a pressure sensor associated with a hydraulic circuit for operating the parking brake,
- a processing unit operatively connected with the pressure sensor and configured to carry out all the steps of any one of claims 1 to 3.

7. Agricultural vehicle (AV) comprising a hydraulic parking brake and equipped with a parking brake wear monitoring system according to claim 6.

8. Vehicle according to claim 7, further equipped with an external push-button panel arranged to be able to control the forward or backward movement of the agricultural vehicle from the outside, keeping the hydraulic parking brake at least partially engaged.

## Patentansprüche

1. Verfahren zur Verschleißüberwachung einer hydraulischen Feststellbremse, das in der Reihenfolge (i) einen ersten Schritt eines Erfassens, bei einem Eingreifen der Feststellbremse, einer Ableitung eines Signals aufweist, das kennzeichnend für einen Druck in einem zugehörigen Betätigungskreislauf der Feststellbremse ist,
wobei das Verfahren **dadurch gekennzeichnet ist, dass** es des Weiteren aufweist
(ii) einen zweiten Schritt des Messens eines Zeitintervalls (TH2, TH3, etc.), das zwischen einem ersten Zeitpunkt (IS), der der Aktivierung des Eingriffsbefehls der Feststellbremse entspricht und mit dem Schalten eines Steuerungsschalters des Hydraulikkreislaufs oder mit einem ersten divergierenden Trend der Ableitung des den Druck kennzeichnenden Signals verbunden ist, und einem zweiten Zeitpunkt (FS1, FS2, FS3) verstreicht, in dem die Ableitung des Signals einen zweiten divergierenden Trend annimmt, und
(iii) einen dritten Schritt des Vergleichens des Zeitintervalls (TH2, TH3, etc.) mit einem vorbestimmten Grenzwert (TH1).

2. Verfahren nach Anspruch 1, das einen vorläufigen Schritt des Festlegens des vorbestimmten Zeitintervalls als den vorbestimmten Grenzwert (TH1) aufweist, das mittels einer ersten vorläufigen Ausführung des ersten und des zweiten Schritts, nämlich wenn die Bremse neu ist, erhalten wird.

3. Verfahren nach Anspruch 1 oder 2, wobei die Ableitung durch Implementieren einer Verarbeitungseinheit berechnet wird, die in geeigneter Weise dazu eingerichtet ist, mindestens das den Druck kennzeichnende Signal zu erfassen.

4. Computerprogramm mit Programmkodierungsmitteln, die zum Ausführen aller Schritte (i-iii) nach einem der Ansprüche 1 bis 3 geeignet sind, wenn das Programm auf einem Computer ausgeführt wird.

5. Computerlesbares Mittel mit einem darauf gespeicherten Programm, wobei das computerlesbare Mittel Programmkodierungsmittel aufweist, die zur Ausführung aller Schritte (i-iii) nach einem der Ansprüche 1 bis 3 geeignet sind, wenn das Programm auf einem Computer ausgeführt wird.

6. Verschleißüberwachungssystem für eine hydraulische Feststellbremse mit:
- einem Drucksensor, der einem Hydraulikkreislauf zur Betätigung der Feststellbremse zugeordnet ist,
- einer Verarbeitungseinheit, die wirkend mit dem Drucksensor verbunden und dazu eingerichtet ist, alle Schritte nach einem der Ansprüche 1 bis 3 auszuführen.

7. Landwirtschaftliches Fahrzeug (AV), das eine hydraulische Feststellbremse aufweist und das mit einem Feststellbremsen-Verschleißüberwachungssystem nach Anspruch 6 ausgestattet ist.

8. Fahrzeug nach Anspruch 7, dass des Weiteren mit einem externen Druckknopffeld ausgestattet ist, das dazu angeordnet ist, ein Steuern der Vorwärts- und Rückwärtsbewegung des landwirtschaftlichen Fahrzeugs von außerhalb zu ermöglichen, wobei die hydraulische Feststellbremse mindestens teilweise betätigt bleibt.

## Revendications

1. Procédé de surveillance de l'usure d'un frein de stationnement hydraulique comprenant successivement (i) une première étape d'acquisition, au niveau d'un enclenchement du frein de stationnement, une dérivée du signal représentative d'une pression dans un circuit d'actionnement correspondant du frein de stationnement,
le procédé est **caractérisé en ce qu'**il comprend en outre (ii) une deuxième étape de mesure d'un intervalle de temps (TH2, TH3, etc.) s'écoulant entre un premier instant (IS), correspondant à l'activation de la commande d'enclenchement du frein de stationnement et associé à la commutation d'un commutateur de commande du circuit hydraulique ou à une première tendance divergente de la dérivée du signal représentative de la pression, et un second instant (FSI, FS2, FS3) où la dérivée dudit signal prend une seconde tendance divergente et (iii) une troisième étape de comparaison dudit intervalle de temps (TH2, TH3, etc.) avec un seuil prédéterminé (THI).

2. Procédé selon la revendication 1, **caractérisé en ce qu'**il comprend une étape préliminaire de fixation comme seuil prédéterminé (THI) dudit intervalle de temps obtenu au moyen d'une première exécution préliminaire de la première et de la deuxième étape, à savoir lorsque le frein est neuf.

3. Procédé selon la revendication 1 ou la revendication 2, **caractérisé en ce que** ladite dérivée est calculée en mettant en oeuvre une unité de traitement adaptée pour acquérir au moins ledit signal représentatif de la pression.

4. Programme informatique comportant des moyens pour coder un programme, apte à réaliser toutes les étapes (i-iii) de l'une quelconque des revendications 1 à 3, lorsque ledit programme est exécuté sur un ordinateur.

5. Moyens lisibles par ordinateur comprenant un programme enregistré, lesdits moyens lisibles par ordinateur comprenant des moyens de codage de programme aptes à effectuer toutes les étapes (i-iii) de l'une quelconque des revendications 1 à 3, lorsque ledit programme est exécuté sur un ordinateur.

6. Système de surveillance de l'usure d'un frein de stationnement hydraulique comprenant
- un capteur de pression associé à un circuit hydraulique pour actionner le frein de stationnement,
- une unité de traitement reliée de manière opérationnelle au capteur de pression et configurée pour effectuer toutes les étapes de l'une des revendications 1 à 3.

7. Véhicule agricole (VA) comprenant un frein de stationnement hydraulique et équipé d'un système de surveillance de l'usure du frein de stationnement selon la revendication 6.

8. Véhicule selon la revendication 7, équipé en outre d'un panneau extérieur à bouton-poussoir agencé pour pouvoir commander la marche avant ou la marche arrière du véhicule agricole depuis l'extérieur, en maintenant le frein de stationnement hydraulique au moins partiellement enclenché.
